# DEMANDE DE BREVET EUROPEEN

(11) **EP 3 017 930 A1**
(43) Date de publication de la demande: **11.05.2016**
(21) Numéro de dépôt: 15193594.7
(22) Date de dépôt: 09.11.2015
(51) Int. Cl.: B29C 45/72, B29C 45/26, B29C 45/14, B29C 45/73

(54) **MOULE COMPRENANT UN MOYEN DE CHAUFFAGE POUR LE SURMOULAGE D'UN INSERT COMPOSITE**

(30) Priorité: 07.11.2014 FR 1460774
(71) Demandeur: COMPAGNIE PLASTIC OMNIUM, 69007 Lyon (FR)
(72) Inventeur: GINJA, Stéphane, 01500 AMBERIEU EN BUGEY (FR); CHENE, Anthony, 01640 JUJURIEUX (FR); GILLE, Denis, 39370 LA PESSE (FR); BRIZIN, Jérôme, 01100 ARBENT (FR)
(74) Mandataire: Remy, Vincent Noel Paul

(57) **Abrégé**

Moule (10) pour surmoulage par une matière (22) d'un insert composite (20) pour véhicule automobile, comprenant deux empreintes (12, 14) délimitant une chambre de moulage (16), comprend un moyen de chauffage (18) permettant de chauffer une partie (A) de l'insert (20) à l'intérieur de la chambre de moulage (16) à une température permettant une bonne adhésion chimique entre la matière (22) et l'insert (20).

## Description

L'invention concerne le domaine technique du surmoulage d'un insert composite pour véhicule automobile.

Les inserts surmoulés sur une pièce automobile sont souvent utilisés pour renforcer la structure de la pièce, généralement entièrement en matière plastique. Pour obtenir une pièce ayant les propriétés mécaniques souhaitées, il est nécessaire d'assurer une bonne adhésion entre la paroi extérieure de l'insert et la matière ajoutée lors du procédé de surmoulage.

On connaît déjà dans l'état de la technique une méthode procédant par une adhésion de type chimique entre un insert et une pièce constitués par un même matériau ou par un couple de matières compatibles chimiquement. Cette méthode permet d'activer la paroi extérieure de l'insert par chauffage. En effet, l'insert doit être à une certaine température, dite température de bonne adhésion, pour que la matière moulée adhère de manière satisfaisante à sa paroi. Cette température de bonne adhésion est généralement supérieure à la température de transition vitreuse de la matière plastique comprise dans ou constituant entièrement l'insert et inférieure à sa température de fusion. Dans le cas d'un insert composite à base de polyamide (PA), l'activation de la paroi se fait à une température de bonne adhésion d'environ 180°C en surface.

Pour atteindre la température d'adhésion souhaitée, l'insert est préchauffé dans un four, généralement un four à infrarouge, un four à air chaud ou encore un four par contact, à une température nettement supérieure à la température de bonne adhésion avant d'être déposé dans un moule tempéré, par exemple entre 80°C et 120°C. En effet, le transfert de l'insert du four au moule et le contact de l'insert avec le moule qui se trouve à plus basse température conduisent systématiquement à une baisse de température d'environ 40°C de l'insert. Ainsi, dans le cas d'un insert en PA, le préchauffage doit alors être effectué aux environs de 220°C, afin de compenser la perte de chaleur par contact entre l'insert et les empreintes du moule, pour espérer une bonne adhésion entre la matière injectée et la paroi de l'insert. Cette perte de chaleur est d'ailleurs accentuée lors du transfert de l'insert entre le four et le moule.

Ainsi, avec cette méthode, il est nécessaire de chauffer l'insert à une température très élevée et bien supérieure à la température de bonne adhésion pour tenir compte de la chute de température, notamment à la surface de l'insert lors de son transfert dans le moule. Cette température de préchauffage, qui est proche et parfois dépasse la température de fusion des matériaux constituant l'insert, en particulier la matrice d'une pièce en matériau thermoplastique, est cependant souvent impossible à atteindre pour ne pas dégrader les propriétés mécaniques de l'insert. De plus, cet apport de chaleur nécessite des investissements considérables pour les installations de chauffage, impliquant des coûts de chauffage importants, et des équipements de transfert rapides et aptes à fonctionner à hautes températures.

Enfin, cette méthode doit garantir un temps de transfert très court entre le préchauffage de l'insert et le procédé d'injection pour ne pas accentuer la perte de chaleur.

L'invention a notamment pour but de fournir un moule, de préférence d'injection, permettant de réaliser le sur moulage d'un insert, de préférence thermoplastique, dans les conditions de température correspondant à une bonne adhésion chimique entre l'insert et la matière injectée.

A cet effet, l'invention a notamment pour objet un moule pour surmoulage par une matière d'un insert composite pour véhicule automobile, comprenant deux parties délimitant une chambre de moulage, caractérisé en ce qu'il comprend un moyen de chauffage permettant de chauffer une partie de l'insert à l'intérieur de la chambre de moulage à une température permettant une bonne adhésion chimique entre la matière et l'insert.

Ainsi, une partie de l'insert, généralement en surface, est chauffée directement à l'intérieur du moule où il va être surmoulé à postériori. Ce procédé de préchauffage ne nécessite aucun déplacement de l'insert à l'extérieur du moule. D'une part, on évite ainsi une perte de chaleur en surface de l'insert entre le préchauffage et le surmoulage, et d'autre part, on simplifie le procédé de préchauffage, en diminuant les risques liés aux manipulations et en économisant de la main d'oeuvre. Il suffit de porter l'insert à la température de bonne adhésion qui est maintenue entre la fin du chauffage et le début du surmoulage, typiquement quelques secondes à quelques minutes, grâce au moule chauffé. En plus de l'économie d'énergie, le risque de dégradation du matériau est fortement diminué et le préchauffage peut être effectué pour un ensemble étendu de matériaux.

Le moule peut en outre comporter l'une ou plusieurs des caractéristiques suivantes, prises seules ou en combinaison.
- Le moyen de chauffage permet de chauffer de manière sélective les parties de l'insert en contact avec la matière. En effet, si le surmoulage ne s'effectue que sur une partie des parois externes de l'insert, il n'est nécessaire de chauffer que ces zones où l'insert est en contact direct avec la matière injectée pour, d'une part, économiser l'énergie, et d'autre part, diminuer le risque de dégradation thermique sur le reste des parois. Le chauffage sélectif peut être réalisé en localisant les moyens de chauffage, par exemple l'embouchure des canaux d'alimentation d'air chaud, dans les zones à surmouler ou encore en utilisant un moule qui protège les zones non surmoulées.
- Le moyen de chauffage comprend un ou plusieurs canaux d'alimentation, situés dans au moins une des deux parties du moule, à travers lesquels un fluide caloporteur peut être injecté à l'intérieur de la chambre de moulage. En effet, lorsque le moule est fermé par-dessus et/ou autour de l'insert, des volumes libres, qui sont destinés à accueillir la matière injectée, sont en contact avec l'insert. Il est alors possible d'injecter, à l'intérieur de ces cavités, le fluide caloporteur à haute température. Il permet d'assurer l'échange de chaleur avec la partie de l'insert à chauffer qui est directement en contact avec la matière injectée lors du surmoulage. Plus la capacité calorifique du fluide est importante, plus l'échange de chaleur sera efficace. Le fluide caloporteur peut être, entre autres, un gaz tel que de l'air, de l'azote, de l'hélium ou encore de la vapeur d'eau, ou un liquide tel que de l'eau ou de l'huile. Le ou les canaux d'alimentation servant à transporter le fluide caloporteur jusqu'à la chambre de moulage sont refermés avant l'injection et le surmoulage de l'insert.
- Le fluide caloporteur est de l'air à haute température. L'air est un bon fluide caloporteur parmi les gaz avec une capacité calorifique d'environ 1,256 kJ·m⁻³·K⁻¹. De plus, il est en abondance dans l'atmosphère, ainsi son coût et sa disponibilité sont très avantageux par rapport aux autres fluides. Malgré une plus grande capacité calorifique de l'eau ou de l'huile, l'utilisation de ces derniers nécessite des étapes supplémentaires de nettoyage et implique d'autres contraintes de manoeuvres, ce qui les rend moins avantageux.
- Le moyen de chauffage comprend un canal d'alimentation situé au droit de la partie de l'insert à chauffer. Dans le but de chauffer sélectivement les zones de l'insert en contact avec la matière injectée, il est préférable d'injecter le fluide caloporteur à proximité de ces zones, en particulier dans les volumes libres destinées à l'injection de la matière. Le canal d'alimentation situé au droit de ces zones permet une meilleure circulation du fluide et un chauffage plus rapide et uniforme.
- Le moyen de chauffage comprend deux canaux d'alimentation, de préférence disposés dans le moule de manière symétrique par rapport à un axe de la chambre de moulage. Ainsi, les canaux d'alimentation permettent de remplir les cavités vides du moule de fluide caloporteur de manière homogène et à la même vitesse car la distance à parcourir par le fluide d'un canal d'alimentation à une zone à réchauffer est à peu près identique quelle que soit la zone considérée.
- Le moule comprend un système d'évacuation du fluide permettant de contrôler la pression au sein du moule. En effet, le fluide injecté à l'intérieur du moule peut sensiblement augmenter la pression dans la chambre de moulage. Il est ainsi préférable de pouvoir évacuer le fluide vers l'extérieur du moule pendant le chauffage et/ou une fois que l'insert est chauffé pour contrôler et régulariser la pression à l'intérieur du moule. Le système d'évacuation du fluide comprend en particulier des canaux d'évacuation et/ou des évents de tailles suffisantes qui permettent une bonne circulation et un débit suffisant du fluide pour apporter la chaleur nécessaire.
- L'air à haute température est injecté à l'intérieur du moule à l'aide d'une turbine.

L'invention sera mieux comprise à la lecture des figures annexées, qui sont fournies à titre d'exemples et ne présentent aucun caractère limitatif, dans lesquelles :
- la figure 1 est une vue schématique en coupe longitudinale d'un moule en position ouverte selon un mode de réalisation,
- la figure 2 est une vue schématique en coupe longitudinale du moule de la figure 1 en position fermée,
- la figure 3 est une vue schématique du moule de la figure 1 au cours du chauffage,
- la figure 4 est une vue schématique du moule de la figure 1 au cours de l'injection.

Un moule 10 comprend deux parties, un poinçon 12 et une matrice 14, délimitant une chambre de moulage 16. Le moule 10 comprend en outre un moyen de chauffage 18 permettant de chauffer au moins une partie d'un insert 20 à l'intérieur de la chambre de moulage 16 à une température permettant une bonne adhésion chimique entre de la matière injectée 22 et l'insert 20.

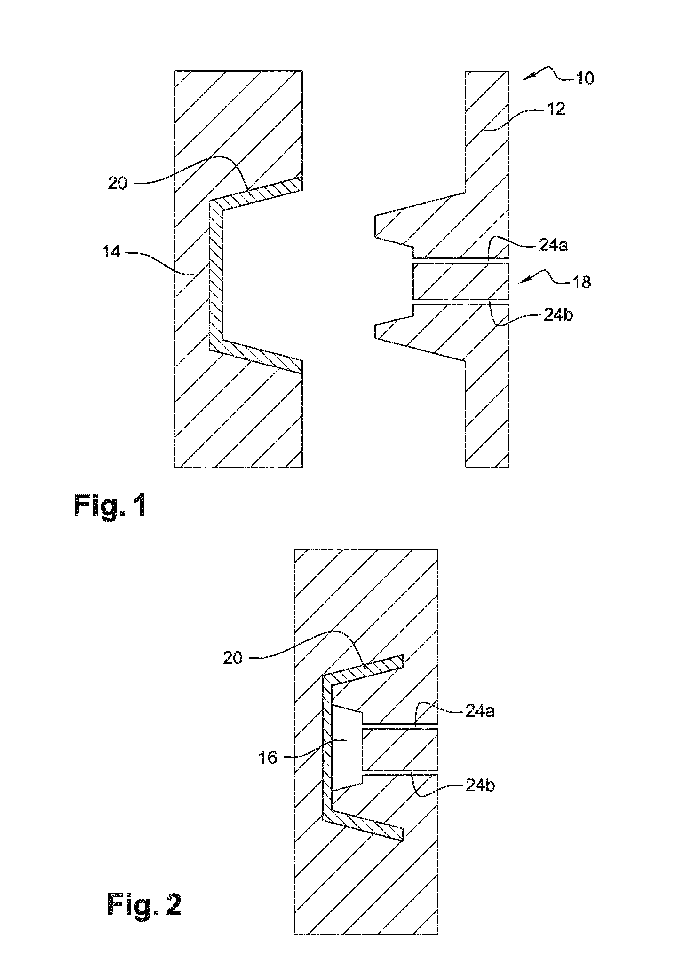

Le moyen de chauffage 18 comprend un ou plusieurs canaux d'alimentation, deux canaux d'alimentation 24a et 24b dans le cas du moule 10 de la figure 1, à travers lesquels un fluide caloporteur 26, par exemple de l'air à haute température, peut être injecté dans la chambre de moulage 16. Le fluide 26 est injecté dans le sens des flèches 28 à l'aide d'une turbine (non représentée sur les figures). De préférence, les canaux d'alimentation 24a et 24b sont disposés dans le moule 10 de manière symétrique par rapport à un axe de la chambre de moulage de façon à simplifier le contrôle de la circulation et de l'homogénéité du fluide 26 dans la chambre de moulage 16.

Une variante du moule 10 serait un moyen de chauffage 18 comprenant un unique canal d'alimentation. Ce dernier est alors de préférence disposé au droit de la partie de l'insert à mouler.

Sur les figures 1 à 3, les canaux d'alimentations 24a et 24b sont représentés sur un même plan parallèle à un axe du moule 10 par soucis de simplicité mais en général, ils peuvent être disposés dans des plans quelconques, tous dans la partie mobile ou dans la partie fixe, ou encore chacun dans une partie différente.

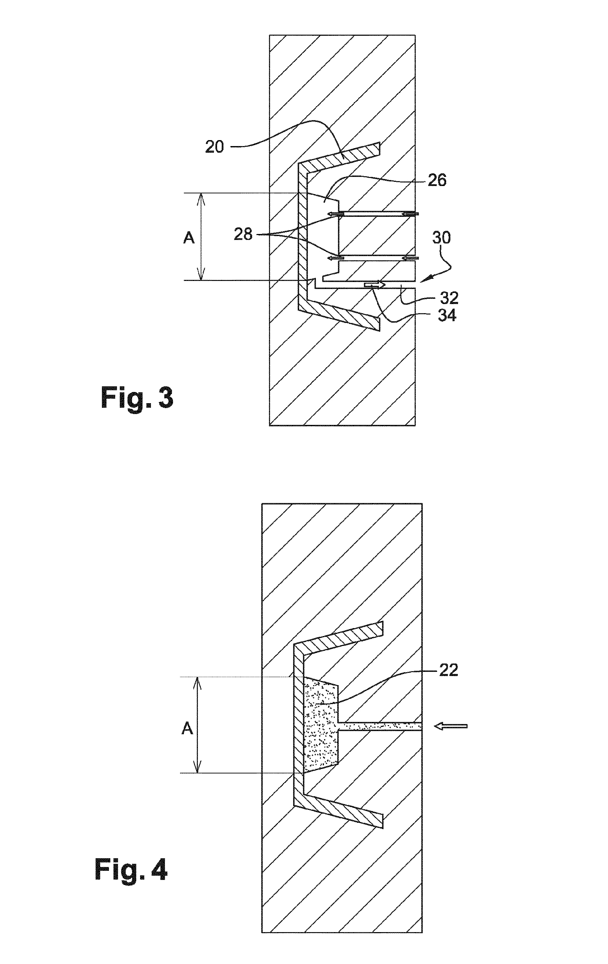

Le moule comprend également un système d'évacuation 30 du fluide 26, qui peut être un simple canal d'évacuation 32, permettant de contrôler la pression au sein du moule 10. Dans un autre mode de réalisation, le système d'évacuation 30 peut comprendre plusieurs canaux d'évacuation. Ainsi lors du chauffage de l'insert, le fluide 26 est injecté par les canaux d'alimentation 24a et 24b et ensuite évacué par le canal d'évacuation 32 dans le sens de la flèche 34. Sur la figure 3, le canal d'évacuation 32 est dans la même partie que les deux canaux d'alimentation 24a et 24b. Dans un autre mode de réalisation, il peut être situé dans la partie mobile ou dans la partie fixe.. Il est représenté dans la figure 3 sur un même plan parallèle à un axe du moule comprenant les canaux 24a et 24b mais de manière générale, les trois canaux peuvent être disposés dans des plans différents ou dans des plans quelconques. De plus, le canal d'évacuation 32 a une embouchure de section suffisante pour permettre un débit de circulation d'air satisfaisant dans la chambre de moulage tout en assurant une montée en pression dans celle-ci.

Le moyen de chauffage 18 permet de chauffer de manière sélective les parties de l'insert 20 où la matière 22 sera injectée. En effet, lors du surmoulage, la matière est injectée dans des cavités vides de la chambre de moulage 16, comme on peut le voir sur la figure 4. Ces mêmes cavités étaient précédemment occupées par le fluide caloporteur 26. Ainsi seule la partie de l'insert 20 comprise dans la zone indiquée par la lettre A sur la figure 4, partie qui est en contact avec la matière injectée 22, est chauffée par le fluide caloporteur 26.

Une utilisation du moule est maintenant expliquée.

Tout d'abord, l'insert 20 est introduit dans le moule tempéré, par exemple entre 80°C et 120°C. Les deux empreintes 12 et 14 du moule se ferment pour délimiter la chambre de moulage 16. Après la fermeture du moule 10, le ou les canaux d'alimentation 24a et 24b sont ouverts. Le fluide caloporteur 26 est alors injecté dans la chambre de moulage 16 à travers ces canaux d'alimentation dans le sens des flèches 28. Pendant et/ou après l'injection du fluide 26, ce dernier est évacué par le système d'évacuation 30 afin de réguler la pression à l'intérieur du moule 10. Lorsque la partie A de l'insert atteint la température de bonne adhésion, les canaux 24a, 24b et 32 sont alors fermés. Pour contrôler l'ouverture et/ou la fermeture des canaux, on peut utiliser par exemple un système de vérins hydraulique ou un système renvoi hydromécanique. La matière 22 est ensuite injectée dans la chambre de moulage 16, prenant la place précédemment occupée par le fluide 26. Le procédé de surmoulage peut alors se dérouler de manière usuelle.

On obtient ainsi une pièce comportant un insert surmoulé par la matière 22 sur sa partie A.

L'invention a été décrite pour un surmoulage par injection d'un insert mais celle-ci peut également être employée pour un procédé de moulage par compression de pièces en matière plastique thermodurcissable ou thermoplastique.

En effet, un tel moule de compression comprend deux parties délimitant une chambre de moulage où sont posés l'insert à surmouler et une ou plusieurs feuilles en matière plastique, par exemple une feuille SMC (Sheet Molding Compound). On y applique une pression en déplaçant une des deux parties du moule afin que la feuille s'adhère à l'insert. Pour que cette adhésion soit satisfaisante, il est nécessaire de préchauffer une partie des parois extérieures de l'insert, en particulier la partie de l'insert en contact avec la matière plastique de la feuille ajoutée. Le même problème de perte de chaleur lors du transfert de l'insert du four au moule et lors du contact entre l'insert et les parois du moule existe. Ainsi le moule selon l'invention permet de chauffer l'insert en surmontant ces inconvénients.

## Revendications

1. Moule (10) pour surmoulage par une matière (22) d'un insert composite (20) pour véhicule automobile, comprenant deux parties (12, 14) délimitant une chambre de moulage (16), **caractérisé en ce qu'**il comprend un moyen de chauffage (18) permettant de chauffer une partie (A) de l'insert (20) à l'intérieur de la chambre de moulage (16) à une température permettant une bonne adhésion chimique entre la matière (22) et l'insert (20).

2. Moule (10) selon la revendication 1, dans lequel le moyen de chauffage (18) permet de chauffer de manière sélective les parties de l'insert (20) en contact avec la matière (22).

3. Moule (10) selon l'une quelconque des revendications précédentes, dans lequel le moyen de chauffage (30) comprend un ou plusieurs canaux d'alimentation (24a, 24b), situés dans au moins une des deux parties du moule, à travers lesquels un fluide caloporteur (26) peut être injecté à l'intérieur de la chambre de moulage (16).

4. Moule (10) selon la revendication précédente, dans lequel le fluide caloporteur (26) est de l'air à haute température.

5. Moule (10) selon la revendication 3, dans lequel le moyen de chauffage (18) comprend un canal d'alimentation situé au droit de la partie de l'insert (20) à chauffer.

6. Moule (10) selon la revendication 3, dans lequel le moyen de chauffage (18) comprend deux canaux d'alimentation (24a, 24b) disposés dans le moule (10) de manière symétrique par rapport à un axe de la chambre de moulage (16).

7. Moule (10) selon l'une quelconque des revendications 3 à 6, dans lequel le moule (10) comprend un système d'évacuation (30) du fluide permettant de contrôler la pression au sein du moule.

8. Moule (10) selon la revendication 4, dans lequel l'air à haute température est injecté à l'intérieur du moule (10) à l'aide d'une turbine.
